## Europäisches Patentamt

## European Patent Office

## Office européen des brevets

(11) Numéro de publication: **0 091 866**

**B1**

(12) **FASCICULE DE BREVET EUROPÉEN**

(45) Date de publication du fascicule du brevet:
**03.09.86**

(51) Int. Cl.⁴: **C 03 B 37/04,** D 01 D 5/18,
C 03 C 13/00

(21) Numéro de dépôt: **83400698.3**

(22) Date de dépôt: **06.04.83**

(54) Formation de fibres comprenant une centrifugation.

(30) Priorité: **06.04.82 FR 8205920**
**12.07.82 FR 8212187**

(43) Date de publication de la demande:
**19.10.83 Bulletin 83/42**

(45) Mention de la délivrance du brevet:
**03.09.86 Bulletin 86/36**

(84) Etats contractants désignés:
**AT BE CH DE FR GB IT LI LU NL SE**

(56) Documents cité:
**DE-A-2 214 351**
**FR-A-2 211 408**
**FR-A-2 298 518**
**FR-A-2 443 436**
**FR-A-2 459 783**
**US-A-4 203 774**

(73) Titulaire: **ISOVER SAINT- GOBAIN, Les Miroirs 18,
avenue d'Alsace, F-92400 Courbevoie (FR)**

(72) Inventeur: **Battigelli, Jean, 17 rue E. Vaillant,
F-60290 Rantigny (FR)**
Inventeur: **Barthe, Marie Pierre, 11 le Haras au
Bois Vieux chemin de Senlis, F-60270 Gouvieux
(FR)**
Inventeur: **Bouquet, François, 30 rue E. Vaillant,
F-60290 Rantigny (FR)**

(74) Mandataire: **Le Vaguerese, Sylvain Jacques,
SAINT- GOBAIN RECHERCHE 39, quai Lucien
Lefranc, F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention concerne les techniques de formation de fibres comprenant une opération de centrifugation.

Plus précisément l'invention se rapporte aux techniques dans lesquelles le matériau à traiter est introduit à l'état étirable dans un centrifugeur présentant à sa périphérie de multiples orifices. Sous l'effet de la force centrifuge le matériau étirable passe par ces orifices et forme des filaments ou "fibres primaires". Un courant annulaire de gaz à haute température longe la paroi périphérique du centrifugeur. Les filaments sont projetés dans ce courant gazeux. Dans ce courant gazeux l'étirage des filaments est complété, et les fibres formées sont entraînées.

Dans ces techniques les fibres formées sont transportées par les gaz jusqu'à un organe de réception constitué ordinairement par un tapis convoyeur perméable aux gaz. Elles se déposent sous forme d'une nappe ou matelas.

Lorsque le produit final doit présenter une certaine cohésion, les fibres sont enduites d'un produit liant au cours de leur trajet vers l'organe de réception. La nappe de fibres enduites passe dans une enceinte de traitement thermique qui assure la polymérisation du liant. Elle est ensuite découpée et conditionnée suivant la forme du produit définitif.

Ces techniques de formation de fibres dans lesquelles l'étirage résulte à la fois de la centrifugation et de l'effet de "traction" exercé par le courant gazeux chaud sont particulièrement intéressantes. Dans l'ensemble elles permettent notamment d'atteindre dans des conditions économiques satisfaisantes des produits isolants présentant les qualités les plus satisfaisantes pour un coût avantageux. Le système d'orifices délivrant les filaments primaires garantit dans une certaine mesure une bonne régularité dans la formation des fibres primaires. La formation de fibres primaires régulières est une condition nécessaire à l'obtention des fibres finales parfaitement étirées. Par ailleurs l'achèvement de l'étirage par les gaz chauds permet de faire passer par chaque orifice un débit de matériau relativement important. Par suite la capacité de production de chaque centrifugeur est élevée ce qui permet une diminution des coûts unitaires.

Ces raisons très schématiques sont certainement insuffisantes pour rendre compte des avantages de ce type de procédé. Elles permettent cependant de souligner en quoi les procédés du type de ceux de l'invention se distinguent de procédés en apparence voisins et qui pourtant, dans leur fonctionnement et leurs résultats, sont très différents.

A titre indicatif on connait par exemple des techniques dans lesquelles l'étirage est uniquement centrifugé (voir FR-A-2 298 518). Dans ces techniques le courant gazeux annulaire entourant le centrifugeur est soit absent soit ne participe pas à l'étirage des fibres. L'avantage supposé de ces techniques est de faire l'économie de la dépense énergétique correspondant à la création du gaz d'étirage à haute température et grande vitesse. L'économie réalisée de cette façon se traduit cependant par une capacité de production du centrifugeur nettement moindre, et globalement les coûts de production ne sont pas abaissés.

Comme il vient d'être rappelé, la fabrication des fibres, et par voie de conséquence celle des produits préparés avec ces fibres, est soumise non seulement à des impératifs de qualité mais aussi à ceux des coûts de production. Ces impératifs recouvrent de nombreux aspects comme nous le verrons plus en détail dans la suite de la description. Pour ce qui concerne la qualité, il s'agit d'abord des propriétés isolantes des produits, mais les propriétés mécaniques jouent aussi un rôle très important. Pour les coûts la diversité est encore plus grande et il faut prendre en considération les investissements, la main-d'oeuvre, les matières premières, l'énergie...

L'art antérieur enseigne des façons de fabriquer des fibres et des produits isolants présentant des qualités supérieures à celles obtenues habituellement par les techniques les plus usuelles. Mais cet enseignement correspond à des mises en oeuvre peu avantageuses au point de vue des coûts de production, soit par exemple que la production soit faible, soit que la consommation énergétique soit trop élevée, soit qu'il faille utiliser des compositions fibrables coûteuses...

Les améliorations proposées antérieurement pour le type de procédé auquel se rattache l'invention sont extrêmement variées et ceci même si l'on se limite aux dispositions qui ne concernent que l'étape de formation des fibres et que par conséquent on écarte tout ce qui est relatif aux traitements ultérieurs auxquels les fibres sont soumises pour parvenir au produit final.

Parmi les plus récentes publications faites à ce sujet, la demande française n° 2 443 436 appartenant à la Société demanderesse contient un certain nombre de propositions. Elles visent notamment la nature du matériau fibré, un ensemble de dispositions ayant pour but un meilleur contrôle de la température et du cheminement du matériau dans le centrifugeur, des structures particulières du centrifugeur lui-même, etc...

D'autres publications antérieures comme le brevet français n° 1 382 917 appartenant également à la demanderesse, s'attachent à améliorer les conditions de projection des fibres primaires dans les gaz d'étirage.

Ces deux exemples ne représentent qu'une très petite partie de la littérature particulièrement abondante à ce sujet. Ils montrent quelle peut être la diversité des propositions faites pour perfectionner ce type de procédé.

Si dans tous les cas le but à atteindre, à savoir l'amélioration de l'ensemble qualité-coût est bien clair, il n'en est pas de même pour ce qui concerne les moyens techniques à mettre en oeuvre pour y parvenir.

L'invention a pour objectif de fournir des moyens permettant d'améliorer les procédés de formation de fibres minérales du type décrit ci-dessus. L'invention a notamment pour but un accroissement de la capacité de production à qualité constante ou de la qualité à capacité constante.

L'invention se propose notamment de fournir de nouvelles conditions de fonctionnement des dispositifs de centrifugation pour aboutir aux résultats indiqués.

L'invention se propose aussi d'aboutir à des produits isolants préparés suivant les nouvelles dispositions et présentant des propriétés isolantes et mécaniques avantageuses sans que le coût de production soit prohibitif.

Les inventeurs ont montré par les recherches entreprises qu'il était possible d'atteindre ces buts et d'autres résultats qui seront présentés dans la suite de la description en choisissant de procéder à la formation des fibres dans des conditions bien déterminées de fonctionnement du centrifugeur.

De façon générale le procédé de formation de fibres à partir d'un matériau thermoplastique tel qu'il est mentionné par le préambule de la revendication 1, lui-même établi sur la base de l'enseignement du brevet FR-A-2 443 436, est caractérisé selon l'invention en ce que la vitesse périphérique, c'est-à-dire la vitesse de déplacement des orifices situés à la périphérie de l'organe de centrifugation, au niveau où s'échappent les filaments est relativement élevée, c'est-à-dire au moins égal à 50m/s.

Les raisons pour lesquelles, en opérant à vitesse périphérique élevée, il est possible d'améliorer la qualité des produits préparés ne sont pas parfaitement élucidées. Ce résultat dans une certaine mesure est même assez surprenant. On sait que l'étirage des filaments de matériau issus des orifices situés à la périphérie du centrifugeur est un phénomène complexe dans lequel interviennent le mouvement du centrifugeur et celui du courant gazeux entraînant les fibres. La simultanéité de ces deux effets a pour conséquence que l'on ne peut déterminer avec certitude le rôle de chacun d'eux dans le mécanisme d'étirage et les effets qu'ils produisent.

Si malgré cela on veut analyser le phénomène on peut raisonnablement admettre que la fibre est obtenue par ce que l'on peut assimiler à un étirage mécanique, le filament étant maintenu à une "extrémité" par le centrifugeur et à l'autre extrémité par les frottements qu'exerce l'air environnant. Dans cette hypothèse le mouvement relatif des deux "extrémités" de la fibre est le résultat de la composition du mouvement de rotation du centrifugeur et du mouvement du courant gazeux.

La direction suivie par les filaments à la sortie du centrifugeur semble bien montrer qu'une telle "composition" de mouvements intervient effectivement dans l'étirage. La projection de la trajectoire du filament dans le plan tangent au centrifugeur fait un certain angle avec la direction d'écoulement des gaz (ordinairement parallèle à l'axe du centrifugeur), et l'on constate que cet angle est bien fonction du rapport de la vitesse périphérique du centrifugeur à la vitesse des gaz.

Dans les conditions habituelles de fonctionnement, l'angle est relativement petit, car la vitesse des gaz est beaucoup plus grande que la vitesse périphérique du centrifugeur. Ceci tendrait à souligner la part prépondérante de l'entraînement par le courant gazeux dans le mécanisme d'étirage des fibres.

Dans ce qui précède nous avons considéré uniquement la projection du développement de la fibre dans le plan tangent au centrifugeur. Expérimentalement, on constate aussi que les filaments s'écartent peu de la paroi périphérique si bien que les remarques faites à propos de la projection conviennent aussi pour la trajectoire réelle de la fibre.

Ces remarques étant faites, des considérations d'ordre purement géométriques que nous analyserons plus en détail plus loin auraient dû conduire à la conclusion que pour améliorer l'étirage des fibres en partant des conditions de fonctionnement traditionnelles, l'accroissement de la vitesse des gaz était la meilleure solution.

On constate en fait que, les autres conditions demeurant inchangées, lorsque l'on accroit de façon sensible la vitesse des gaz pour tenter d'obtenir des fibres extrêmement fines on obtient des produits dont les qualités sont sensiblement moins bonnes, en particulier ces fibres sont très irrégulières fragiles et courtes, et les feutres isolants préparés avec ces fibres présentent de mauvaises propriétés mécaniques, et même quoiqu'à un degré moindre, thermiques.

De façon surprenante les inventeurs ont constaté que des améliorations très sensibles de qualité des produits isolants sont obtenues lorsque les autres conditions restant inchangées, la vitesse périphérique est augmentée.

S'il est souhaitable d'avoir une grande vitesse périphérique, il va de soi que pour des raisons d'ordre technologique cette vitesse ne peut être accrue indéfiniment. En pratique il est difficile de dépasser des vitesses de l'ordre de 150 m/s et le plus souvent la vitesse selon l'invention se situe entre 50 et 90 m/s.

La vitesse périphérique est limitée en particulier par des questions de résistance mécanique des centrifugeurs utilisés. Même si le remplacement périodique du centrifugeur est inévitable, la durée de vie dans les conditions de fonctionnement selon l'invention doit rester compatible avec les exigences de fiabilité technique, et aussi de coût, indissociables de toute exploitation industrielle.

Le remplacement du centrifugeur dans les conditions de fonctionnement traditionnelles est ordinairement nécessaire après quelques centaines d'heures de service. Il est important de faire en sorte que la durée de vie, dans les dispositions selon l'invention, ne soit pas plus courte que celle correspondant aux mises en oeuvre antérieures et même, le cas échéant, soit sensiblement plus longue.

Une limitation de la vitesse de rotation - et par suite une limitation des efforts supportés par le centrifugeur - qui ne fait pas obstacle aux conditions définies précédemment semble donc particulièrement souhaitable pour la mise en oeuvre de l'invention. Compte tenu des matériels habituellement utilisés, il semble avantageux de ne pas dépasser la limite de 8000 tours/minute.

Si la vitesse de rotation est limitée pour que le centrifugeur ne soit pas soumis à des efforts trop importants, il faut que l'effet centrifuge reste suffisant pour assurer la projection du matériau à fibrer hors des orifices du centrifugeur dans des conditions satisfaisantes, notamment de débit. Il est ainsi préférable que la vitesse de rotation ne soit pas inférieure à 800 tours/minute.

En pratique dans le choix d'une vitesse de rotation et d'une vitesse périphérique, les questions soulevées par les limites de résistance de l'appareillage font qu'ordinairement les vitesses périphériques les plus grandes sont associées aux vitesses de rotation les plus petites et inversement. Cette façon de procéder ne représente pas nécessairement une optimisation au plan de la formation du produit mais un compromis pour assurer une longévité raisonnable de l'installation.

Le débit de matériau passant par chacun des orifices du centrifugeur est un facteur très important de ce type de procédé. Bien entendu, ce débit détermine directement la capacité globale de production du centrifugeur. De façon moins immédiate ce débit par orifice est aussi un élément qui influe de façon substantielle sur les caractéristiques des fibres produites.

On comprend sans peine que plus le débit par orifice est élevé plus l'étirage doit être intense pour parvenir à une finesse constante.

Compte tenu des nécessités pratiques de la production, le débit par orifice ne peut pas être très faible. Pour un matériau constitué par du verre ou un matériau analogue, un débit de 0,1 kg/jour peut être considéré comme une limite inférieure au-dessous de laquelle il n'est plus économique d'opérer.

A l'opposé, un débit trop élevé ne permet pas d'atteindre des fibres très fines. Pour les qualités requises en matière d'isolation, le débit de matériau n'est pas, de préférence, supérieur à 3 kg/jour.

Avantageusement, les compromis entre la capacité de production et la qualité de la fibre conduisent à régler le débit par orifice à une valeur comprise entre 0,7 et 1,4 kg/jour.

Dans les conditions selon l'invention la capacité de production de l'organe de centrifugation peut atteindre des valeurs très importantes sans que la qualité des fibres, ou celle du produit final, en soit diminuée. Il va de soi qu'il est également possible de maintenir la production à un niveau moins élevé, notamment pour améliorer encore la qualité.

Les avantages procurés par l'invention sur ce point sont bien nets.

L'accroissement de la production qui est un facteur économique important est d'un intérêt tout particulier. Il a fait l'objet de nombreuses propositions dans l'art antérieur: augmentation du nombre d'orifices du centrifugeur, augmentation de la section de ces orifices, augmentation de la fluidité du matériau... Ces divers éléments permettent effectivement de modifier le débit de matériau passant dans le centrifugeur, mais les propositions faites à ce sujet ont pour contrepartie une diminution de la qualité ou des difficultés en ce qui concerne la longévité de l'appareillage.

Ainsi un accroissement de la densité des orifices à la périphérie du centrifugeur, c'est-à-dire du nombre d'orifices par unité de surface, non seulement affaiblit le centrifugeur mais, passé un certain seuil, apparait défavorable à la qualité des fibres. On peut supposer que les fibres primaires, trop serrées à l'origine, s'entrechoquent et se collent avant que leur étirage ne soit complet. Ceci peut expliquer pourquoi les fibres recueillies dans ces conditions sont moins régulières, moins fines et plus courtes.

Un problème de même nature est rencontré lorsque, toujours dans le but d'accroître la capacité de production, la section des orifices est augmentée en maintenant les mêmes conditions de viscosité du matériau fibré. Dans ce cas les fibres primaires sont plus grosses et il est difficile d'aboutir à un étirage satisfaisant même en modifiant le régime des gaz annulaires d'étirage.

L'augmentation de fluidité pour un matériau déterminé, c'est-à-dire l'augmentation de sa température pose d'autres problèmes. Les températures opératoires se situent ordinairement à la limite de ce que peut supporter l'alliage du centrifugeur. Souvent même, la nature de la composition à fibrer est choisie pour tenir compte de ce type de limitation. L'augmentation de température dans cette hypothèse est impossible sauf à avoir recours à des métaux précieux pour constituer le centrifugeur, ce qui soulève d'autres difficultés notamment de coût mais aussi de caractéristiques mécaniques.

L'augmentation de fluidité peut être atteinte aussi en utilisant des matériaux dont la composition est établie pour conduire à ce resultat. Mais ces compositions ont pour inconvénient d'être sensiblement plus coûteuses.

Inversement dans la littérature antérieure, les procédés dont l'objet est d'aboutir à une amélioration de la qualité conduisent à une diminution de la production.

Grâce à l'invention, bien que l'opposition qualité/quantité subsiste, le résultat se situe à un niveau nettement meilleur. Aussi lorsque l'on se fixe pour but une production de bonne qualité (nous verrons dans la suite de la description comment celle-ci est évaluée), comparable à celle qui était obtenue auparavant avec ce type de procédé, on dépasse aisément une production de l'ordre de 12 tonnes de matériau fibré par jour et par centrifugeur.

En pratique il apparait avantageux selon l'invention de maintenir la production à un niveau supérieur à 17 tonnes par jour, et des productions de 20 à 25 tonnes ou plus peuvent utilement être atteintes tout en conservant un produit d'excellente qualité.

Il est remarquable que ces résultats soient atteints sans avoir recours aux modifications indiquées précédemment. Il n'est pas nécessaire de changer la densité des orifices ni leurs dimensions etc.. Les fibres primaires formées sont donc dans l'ensemble comparables à celles des techniques antérieures analogues, et l'étirage étant amélioré, comme nous l'avons dit précédemment, la qualité des produits est meilleure.

L'étirage des fibres par les courants gazeux est conduit au moyen d'un générateur dont l'orifice annulaire se situe à proximité immédiate du centrifugeur. Le flux gazeux présente une certaine largeur afin que les filaments projetés hors du centrifugeur restent entierement plongés dans ce flux gazeux et par suite soient maintenus dans les conditions propres à leur étirage.

La largeur du flux à l'origine dépend bien entendu de la configuration géométrique précise du dispositif de fibrage. Pour une disposition donnée, les variations utiles sont relativement limitées compte tenu de ce que pour restreindre la dépense énergétique on s'efforce de réduire autant que possible la largeur du flux gazeux.

Dans les dispositions traditionnelles initialement, la largeur du flux gazeux est de l'ordre de 0,3 à 2 cm.

La pression du gaz émis dans ces conditions se situe à des valeurs qui peuvent varier de 100 à 1000 mm de colonne d'eau (CE) pour une largeur d'émission inférieure à 2 cm et de préférence de 200 à 600 mm CE pour une largeur d'émission inférieure à 1,5 cm.

En analysant dans ce qui précéde les effets respectifs de la vitesse périphérique, du débit de matériau et de la pression des gaz d'étirage, nous avons été conduits à plusieurs reprises à préciser qu'en pratique ces divers paramètres intervenaient ensemble sur la qualité ou le coût des produits obtenus. Des relations sans signification physique précises peuvent être établies entre ces divers paramètres pour rendre compte des conditions les plus avantageuses de fonctionnement proposées par l'invention.

Par ailleurs indépendamment de ces paramètres de fonctionnement il est important de faire figurer dans ces expressions une mesure traduisant la qualité du produit obtenu. De cette façon ces expressions permettent de distinguer nettement les conditions de mise en oeuvre selon l'invention de celles de l'art antérieur.

Ainsi selon l'invention la vitesse périphérique $\underline{v}$ des orifices du centrifugeur, exprimée en mètre par seconde, la masse de matériau $\underline{q}$ passant par chaque orifice du centrifugeur, exprimée en kg par orifice et par jour et la pression d'émission $\underline{p}$ du gaz d'étirage exprimée en mm de colonne d'eau pour une longueur d'émission d'au moins 5 mm et d'au plus 12 mm sont choisies avantageusement, de telle façon que le rapport q.v/p soit compris entre 0,07 et 0,5 et de façon préférée entre 0,075 et 0,2.

Il est commode pour bien faire apparaitre les particularités de l'invention, d'introduire un paramètre se rapportant à la finesse des fibres. La finesse n'est pas le seul critère pour qualifier les produits comme nous le verrons dans la suite. Nous la choisissons car elle constitue sans doute le paramètre le plus accessible et le plus significatif de la qualité de l'étirage effectué.

La finesse des fibres est traditionnellement déterminée indirectement par ce qui est nommé le "micronaire" (F).

Le micronaire est mesuré de la façon suivante. Un échantillon du produit ordinairement de 5 g est placé dans un compartiment traversé par un courant gazeux émis dans des conditions, notamment de pression, bien fixes. L'échantillon traversé par le gaz forme un obstacle qui tend à freiner le passage de ce gaz. La mesure du débit gazeux est relevée sur un débit-mètre gradué. Ce sont ces valeurs définies pour des conditions normalisées qui sont relevées.

Plus les fibres sont fines pour un même poids d'échantillon plus le débit est faible.

Les valeurs les plus usuelles des micronaires pour les produits isolants se situent entre 2 et 6 sous 5 g. Les produits présentant un micronaire inférieur ou égal à 3 pour 5 g sont considérés comme très fins. Il leur correspond généralement un meilleur pouvoir isolant par unité de masse du produit.

Selon l'invention le rapport q.v/p.F est avantageusement supérieur à 0,035, $\underline{q}$, $\underline{v}$, $\underline{p}$ et$\underline{F}$ (pour 5 g) étant exprimés dans les unités indiquées ci-dessus. De préférence ce rapport est supérieur à 0,040.

Lorsque l'on opère dans des conditions déterminées de pression, l'invention peut aussi se caractériser par un rapport simplifié q.v/F. Ce rapport dans le cas de l'invention est avantageusement supérieur à 17 et de préférence supérieur à 18.

Dans les expressions précédentes, le rapport q/F traduit d'une certaine façon les avantages du procédé selon l'invention. Il est d'autant plus grand que le produit est obtenu en plus grande quantité et est plus fin. Les paramètres $\underline{v}$ et $\underline{p}$ pour leur part peuvent être rapprochés de la façon dont s'effectue l'étirage des fibres. Quoiqu'il en soit les expressions utilisées comme nous l'avons dit n'ont pour fonction que de permettre une bonne caractérisation de l'invention vis-à-vis des techniques antérieures.

Un avantage des procédés du type de ceux de l'invention est d'ètre utilisables pour la formation de fibres à partir d'une large gamme de matériaux. Parmi les matériaux utilisables les compositions verrières définies comme suit sont particulièrement préférées.

- SiO$_2$ 61 - 66 - Na$_2$O 12,55 - 16,5
- Al$_2$O$_3$ 2,5 - 5 - K$_2$O 0 - 3
- CaO 6 - 9 - B$_2$O$_3$ 0 - 7,5
- MgO 0 - 5 - Fe$_2$O$_3$ moins de 0,6

Les valeurs indiquées ci-dessus sont exprimées en pourcentage en poids de chacun des constituants. Bien entendu la composition exacte peut renfermer des traces d'éléments divers.

D'autres conditions interviennent dans la mise en oeuvre des procédés selon l'invention. Elles concernent notamment le matériau (température) et le courant gazeux d'étirage (température). Ces conditions ne se distinguent pas notablement des conditions correspondantes antérieurement décrites. Il ne parait donc pas nécessaire d'en reprendre l'étude ici.

D'autres avantages et particularités du procédé selon l'invention apparaissent dans la suite de la description et des exemples de mise en oeuvre. Ceux-ci n'ont pour but que d'illustrer l'invention de façon plus détaillée et n'ont aucun caractère limitatif.

La suite de la description concerne notamment le type de dispositif utilisé. Il y est fait référence aux planches de dessins dans lesquelles:

- la figure 1 est un schéma présentant en perspective un centrifugeur et la trajectoire d'une fibre formée à la périphérie du centrifugeur.
- la figure 2 est une représentation de la projection de la trajectoire de la fibre de la figure 1 dans le plan tangent au centrifugeur,
- la figure 3 est vue en coupe de l'ensemble d'un dispositif de fibrage utilisable selon l'invention;
- la figure 4 est, à une échelle plus grande, une partie de la figure 3 présentant les différents éléments intervenant dans la zone où s'effectue l'étirage des fibres.

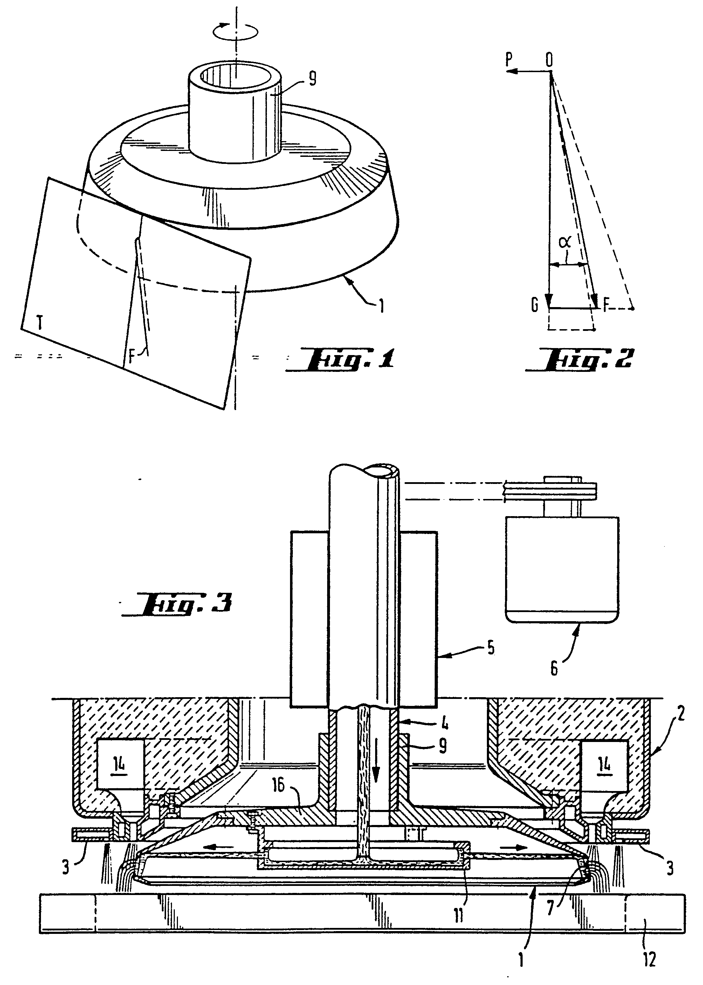

Les figures 1 et 2 ont pour but de montrer les influences respectives de la centrifugation et du courant gazeux sur l'étirage des fibres.

De façon schématique la figure 1 présente un centrifugeur sur la paroi périphérique duquel sont disposés des orifices. La trajectoire d'une fibre F est aussi représentée sur cette figure de même que le plan tangent T à la paroi du centrifugeur au niveau d'émission de la fibre F.

Le sens de rotation du centrifugeur est indiqué par une flèche.

Bien que schématique, la trajectoire de la fibre sur cette figure présente l'essentiel des caractéristiques effectivement observées.

On constate ainsi que le matériau s'écarte de la paroi du centrifugeur mais, après une très courte distance, la trajectoire est infléchie sous l'effet du courant gazeux chaud qui longe cette paroi.

Après quoi le développement de la fibre suit approximativement la direction correspondant à la composition des vitesses du centrifugeur et du courant gazeux.

Dans le plan tangent au centrifugeur, la projection de cette composition est du type représenté à la figure 2, 0 étant l'orifice et l'angle

α l'angle que fait la projection avec la direction de propagation du gaz représentée par le vecteur $\vec{OG}$.

L'angle α dans les conditions traditionnelles de vitesse du centrifugeur (représentée par le vecteur $\vec{OP}$) et de vitesse des gaz, est de l'ordre d'une vingtaine de degrés ou moins.

On comprend ainsi qu'à priori un accroissement de la vitesse du centrifugeur même relativement important (tel que figuré en tirets) n'aurait pas dû modifier de façon très sensible l'étirage des fibres. L'intensité de cet étirage peut être représenté par la somme des vecteurs $\vec{OG}$ et $\vec{OP}$. Un accroissement de $\vec{OP}$ n'entraine qu'une faible variation de la somme en raison du fait que l'angle α est petit. Pour améliorer l'étirage il aurait semblé avantageux au contraire d'accroître la vitesse des gaz. Nous verrons dans les exemples de mise en oeuvre que c'est plutôt l'inverse que l'on constate, et que pour avoir des fibres mieux étirées et de meilleure qualité, il est préférable d'accroitre la vitesse périphérique du centrifugeur.

Voyons maintenant de façon plus détaillée la composition de l'installation de formation des fibres.

Le dispositif de formation des fibres représenté à la figure comprend un centrifugeur proprement dit désigné globalement par la référence 1. Ce centrifugeur disposé horizontalement est porté par l'ensemble 4 formant l'arbre du dispositif. Cet arbre est placé dans un boîtier de roulement 5. L'ensemble de l'arbre 4 et du centrifugeur est entraîné en rotation par un moteur 6 par l'intermédiaire d'organes de transmission non représentés tels que des courroies.

Le courant de gaz chaud annulaire est émis par un brûleur désigné globalement par la référence 2.

Une couronne de soufflage 3 concentrique au centrifugeur émet un courant également annulaire d'air à basse température.

Un élément 12 de chauffage à induction par haute fréquence, en forme d'anneau, entoure le centrifugeur à sa partie inférieure.

Pour éviter les contraintes et les déformations, différents éléments isolants ou de refroidissement non représentés sont disposés aux emplacements convenables du dispositif.

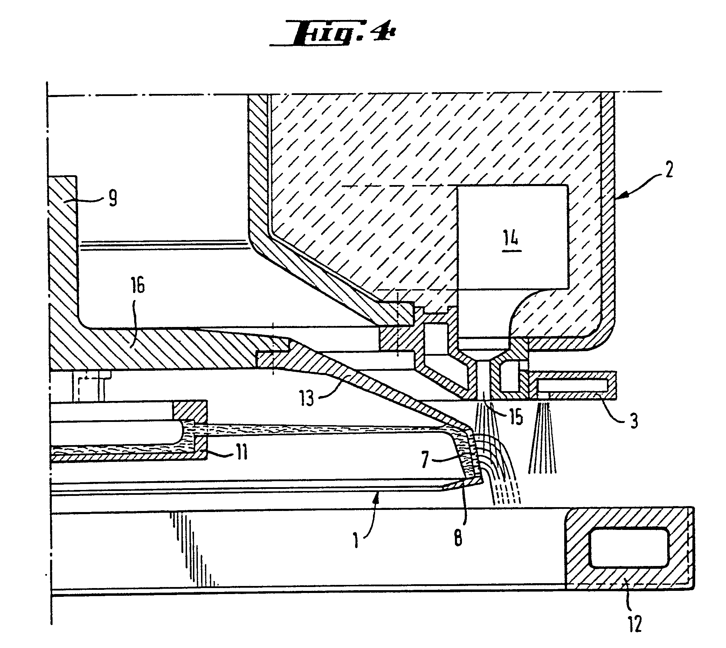

La composition du centrifugeur 1 donnée en se reportant le cas échéant à la figure 4 est la suivante:

La fixation sur l'arbre creux 4 est assurée par le moyeu 9. Solidaire du moyeu 9 la jante 16 en forme de disque supporte d'une part un panier distributeur 11 et la partie 13 du centrifugeur.

La paroi périphérique 7 du centrifugeur d'où sont projetées les fibres primaires est solidaire de la partie 13. Cette paroi périphérique est légèrement inclinée par rapport à la verticale de façon que les gaz émis par le brûleur 2 longent uniformément toute sa surface.

La résistance à la déformation du centrifugeur est renforcée par un revers 8 qui fait suite à la paroi périphérique 7 et est solidaire de cette dernière.

Sur les figures 3 et 4 les orifices par lesquels le matériau à fibrer est centrifugé ne sont pas représentés en raison de leur finesse. Ces orifices sont répartis de façon régulière en rangées horizontales. Les orifices de deux rangées consécutives sont décalés les uns par rapport aux autres pour assurer un maximum de distance entre les orifices voisins.

La structure du centrifugeur doit être conçue pour permettre de supporter d'importants efforts mécaniques. Il apparait cependant préférable de maintenir ouverte la partie inférieure. Cette disposition, en plus des facilités qu'elle procure pour la réalisation du centrifugeur, évite éventuellement les déformations qui pourraient résulter des différences de températures entre la périphérie et le fond du centrifugeur.

Le cheminement du matériau à fibrer dans le dispositif représenté est le suivant. Un filet continu de matériau fondu s'écoule dans l'axe de l'arbre 4 creux. Ce matériau fondu est reçu au fond du panier 11. La rotation de ce dernier conduit le matériau sur la partie périphérique du panier 11 qui est percée de multiples orifices. A partir de ces orifices, sous l'effet de la centrifugation, le matériau est projeté sur la face interne de la paroi périphérique 7 du centrifugeur 1. Là, le matériau forme une couche continue. Toujours sous l'effet de la centrifugation, le matériau franchit les orifices de la paroi 7, et est projeté sous forme de minces filets dans les gaz d'étirage où il achève d'être étiré sous forme de fibres. Ces gaz sont émis à partir de la tuyère 15 du brûleur 2. Le souffleur annulaire 3 engendre une nappe gazeuse qui enveloppe le courant gazeux d'étirage et le canalise notamment pour éviter que des fibres ne viennent heurter l'anneau inducteur 12.

Le panier distributeur 11 joue un rôle important dans la formation des conditions d'étirage. Il s'y constitue une première réserve qui égalise le flux de matériau. Ceci permet en particulier de distribuer le matériau de façon très régulière sur tout le tour de la face interne de la paroi périphérique 7 du centrifugeur.

L'étude détaillée du panier distributeur qui figure dans la demande de brevet français n° 2 443 436 précitée fait ressortir certaines caractéristiques importantes pour le bon fonctionnement de l'ensemble. Il s'agit notamment de la dimension des orifices situés à la périphérie du panier d'où le matériau à fibrer est projeté sur la face interne de la paroi périphérique 7, et de la disposition spatiale du panier et en particulier des orifices de celui-ci vis-à-vis du centrifugeur. Pour plus d'informations à ce sujet on pourra se reporter avantageusement au brevet antérieur précité.

Les centrifugeurs pour la mise en oeuvre de l'invention, en plus des caractéristiques déjà énoncées, peuvent se distinguer des dispositifs analogues connus antérieurement par des dimensions très sensiblement accrues.

Avantageusement le diamètre du centrifugeur au niveau de sa paroi périphérique est égal ou supérieur à 500 mm et il peut atteindre et même dépasser 1000 mm, alors que les centrifugeurs couramment utilisés jusqu'à ce jour ne dépassent pas 400 mm.

Cet accroissement du diamètre du centrifugeur joue un rôle important pour de nombreuses caractéristiques de mise en oeuvre de ce type de procédé. Ainsi l'augmentation du périmètre du centrifugeur, sans changement de la hauteur de la paroi périphérique, accroit la surface disponible pour les orifices. Sans modifier leur distribution, en particulier sans changer leur nombre par unité de surface, on peut ainsi disposer d'un plus grand nombre d'orifices et accroitre en conséquence la capacité de production. L'amélioration de production que l'on obtient de cette façon se fait sans porter atteinte aux dispositions qui déterminent la qualité des fibres, et l'accroissement de l'effet d'étirage dû à la vitesse périphérique par rapport à l'effet d'étirage par le courant gazeux dans les conditions définies par l'invention permet même une amélioration de cette qualité.

Bien que l'utilisation de centrifugeurs de diamètres supérieurs aux dimensions traditionnelles soit préférée, la mise en oeuvre des centrifugeurs de diamètres de l'ordre de 200, 300 ou 400 mm dans les conditions prévues selon l'invention présente certains avantages. Le fonctionnement à des vitesses périphériques supérieures à 50 m/s permet notamment, indépendamment des dimensions du centrifugeur, une amelioration des qualités des produits isolants formés.

Pour les centrifugeurs traditionnels, l'augmentation de la vitesse périphérique nécessite un accroissement de la vitesse de rotation qui peut atteindre jusqu'à environ 8000 t/mn ou plus. Les limites à la vitesse de rotation, comme nous l'avons déjà indiqué, sont d'ordre pratique. Elles sont déterminées par la résistance du centrifugeur aux contraintes qui s'exercent lors de son fonctionnement.

Pour les centrifugeurs de très grand diamètre selon l'invention, la vitesse de rotation est de préférence entre 1000 et 2250 tours/minute.

Il est capital pour le bon fonctionnement de l'ensemble que les conditions d'étirage soient rigoureusement identiques en tout point de la périphérie du centrifugeur. Dans ce sens il est nécessaire que le courant de gaz à haute température soit bien uniforme.

Dans les modes les plus habituels, le courant gazeux est formé à partir de plusieurs chambres de combustion réparties réguliérement autour du centrifugeur. Une chambre de ce type est représentée en 14 à la figure 3. Les gaz de combustion produits dans la chambre 14 sont conduits à proximité de la paroi périphérique du centrifugeur et s'échappent par une tuyère annulaire 15 commune à l'ensemble des diverses chambres de combustion 14.

Lorsque les dimensions respectives du centrifugeur et du générateur de gaz d'étirage ne sont pas trop grandes, l'uniformisation du courant gazeux est obtenue sans trop de difficultés. Le gaz émis présente sensiblement les mêmes caractéristiques sur toute l'étendue de la tuyère 15. Ceci devient d'autant plus difficile à obtenir que les dimensions sont plus grandes comme c'est éventuellement le cas suivant l'invention.

Pour faciliter l'obtention de conditions de soufflage uniformes à la sortie du brûleur il parait avantageux d'utiliser une chambre de combustion unique entourant le centrifugeur. Cette chambre de combustion annulaire unique permet un meilleur équilibre des pressions et des débits gazeux sur toute la largeur de la tuyère 15.

A ce point de la description et avant d'examiner les exemples de modes de mise en oeuvre et de produits obtenus, il est nécessaire de préciser les grandeurs qui caractérisent les produits pour mieux comprendre la nature des améliorations apportées par l'invention.

Dans cette approche nous considérons essentiellement la production d'isolants constitués d'un feutre ou matelas de fibres. Ces produits à eux seuls représentent une part considérable de l'ensemble des applications des fibres minérales. Bien entendu celà n'exclut pas la mise en oeuvre de l'invention pour la préparation de produits destinés à d'autres usages.

Comme nous l'avons indiqué les deux types principaux de qualités qu'on s'efforce d'obtenir sont des qualités isolantes thermiques mais également des qualités mécaniques. Ces dernières se rapportent à des aspects bien spécifiques des produits isolants. Il faut en particulier que le produit se prête bien aux manutentions et conditionnements qu'exigent des produits volumineux et de faible masse spécifique.

Pour un produit donné la qualité isolante est définie par sa resistance thermique R. Elle exprime la capacité du produit en question de s'opposer aux échanges thermiques lorsque règnent des températures différentes de part et d'autre du produit. Cette valeur dépend non seulement des caractéristiques des fibres et de leur arrangement au sein du produit, mais aussi de l'épaisseur du produit.

Plus un produit est épais plus sa résistance thermique est grande. Si l'on veut comparer des résistances thermiques de différents produits, il est donc nécessaire de préciser l'épaisseur de ces produits. Nous verrons plus loin que la question d'épaisseur est étroitement liée aux propriétés mécaniques des produits. Dans la littérature il est aussi parfois fait référence à la conductivité thermique, grandeur qui fait abstraction des dimensions du produit. Il s'agit en quelque sorte de la mesure intrinsèque de la qualité isolante. Dans la pratique cependant, c'est la résistance thermique qui est le plus souvent utilisée pour caractériser les produits. Dans les exemples c'est donc cette grandeur que nous avons retenue.

En dépit de nombreuses études faites à ce sujet, il n'est encore pas possible d'établir une corrélation complète entre la résistance thermique, ou la conductivité thermique, et les données mesurables concernant la structure du produit. Certaines considérations permettent néanmoins d'orienter la production en fonction du résultat recherché.

Ainsi une plus grande quantité de fibres pour une même surface recouverte permet d'accroître les propriétés isolantes. Mais cet accroissement s'accompagne d'un accroissement des coûts. Il est donc intéressant dans la mesure du possible d'avoir une résistance thermique donnée avec le moins de fibres possible. La comparaison du "grammage", c'est-à-dire la masse de fibres par unité de surface pour différents produits de même résistance thermique, constitue une mesure de leurs qualités respectives. La qualité du produit dans ce cas varie en sens inverse du grammage.

Il est établi également que la finesse des fibres est un facteur important dans la caractérisation des qualités isolantes. Pour un même grammage, le produit est d'autant plus isolant que les fibres sont plus fines.

Les grandeurs mécaniques utiles pour l'appréciation du produit sont pour l'essentiel liées au problème de son conditionnement.

Dans l'ensemble il s'agit en effet de produits très volumineux qu'il est avantageux d'emmagasiner à l'état comprimé. Il faut cependant que le produit comprimé reprenne un certain volume une fois libéré afin de développer au mieux ses qualités isolantes.

Après compression le matelas de fibres prend de lui-même une certaine épaisseur, différente de l'épaisseur avant compression, et de celle à l'état comprimé. Il est souhaitable que l'épaisseur reprise après le déballage soit aussi importante que possible pour obtenir un produit présentant une bonne résistance thermique.

Plus précisément pour un produit (déballé) dont les caractéristiques sont bien normalisées, et en particulier dont l'épaisseur est garantie, il est important qu'à l'état comprimé il occupe un volume minimum. Cette reprise d'épaisseur garantie est aussi exprimée par le taux de compression admissible.

Il est difficile d'établir un rapport étroit entre les qualités mécaniques et les qualités isolantes d'un produit, même lorsque l'on s'efforce d'analyser les unes et les autres en termes de structure, de dimensions des fibres, etc... L'expérience montre seulement que l'amélioration des qualités isolantes est compatible avec celle du taux de compression.

Dans la suite de la description, figurent des exemples de mise en oeuvre de l'invention.

## 1°/ Essais comparatifs.

Ces essais comparatifs ont été conduits pour mettre en évidence les avantages que l'on constate à opérer dans les conditions prescrites par l'invention par rapport aux conditions opératoires antérieures.

Une difficulté pour l'établissement de ces essais comparatifs réside comme nous l'avons vu dans la multiplicité des facteurs susceptibles d'influencer la qualité du produit final.

Dans toute la mesure du possible, dans ces essais on recherche les conditions de mise en oeuvre qui permettent de maintenir constants les paramètres sensibles à de multiples influences.

Le tableau suivant résume les caractéristiques variables et les résultats obtenus en ce qui concerne le produit préparé. Les trois premiers essais sont effectués dans des conditions de fonctionnement qui ne correspondent pas à l'invention.

I II III IV
- vitesse périphérique (v)(m/s) 38 38 38 56,5
- débit par orifice (q)
(kg/jour) 1,1 1,30 1,16 1,1
- pression (p) (mm CE) 758 1020 650 470
- q.v/p 0,055 0,048 0,068 0,13
- micronaire sous 5 g (F) 3 3 4,5 3
- q.v/p.F 0,0184 0,016 0,015 0,043
- q.v/F 13,9 16,4 9,79 20,7
- débit total du centrifugeur (tonnes/jour) 9 18 18 18
- grammage pour R = 2 (g/m$^2$) 945 1080 1215 945
- taux de compression 4 2 4 4
- résistance à la traction (g/g) 250 150 250 250

La qualité des produits préparés est définie dans ce tableau notamment par le grammage nécessaire pour obtenir une résistance thermique déterminée pour une épaisseur également déterminée. Nous avons choisi pour référence la valeur de résistance thermique de 2 m$^2$° K/W mesuré à 297° K pour une épaisseur de 90 mm. Ces conditions correspondent à un isolant normalisé.

Le taux de compression est le rapport de l'épaisseur nominale garantie après 3 mois de stockage à l'état comprimé à l'épaisseur du produit comprimé.

La résistance à la traction est mesurée selon la norme ASTM C 686 - 71 T.

Le tableau précédent permet de tirer plusieurs conclusions.

En comparant l'essai IV selon l'invention à l'essai II on constate par exemple que pour une finesse de produit constante et pour un même débit global du centrifugeur, en opérant dans les conditions prescrites par l'invention on obtient d'une part un produit de meilleure qualité (le grammage est plus faible), un taux de compression sensiblement amélioré et une meilleure résistance à la traction.

L'amélioration du grammage observée permet pour une même quantité de matériaux fibrés d'accroitre la quantité de produit d'environ 10 %.

L'amélioration du taux de compression permet un gain très important de frais de transport et de stockage.

Si comme pour les exemples I et IV on régle les conditions de fonctionnement pour avoir les mêmes qualités de produit on constate que le débit du centrifugeur dans le mode selon l'invention est accrû dans des proportions considérables ce qui rend le procédé nettement plus économique.

Une autre façon de comparer l'invention aux modes antérieurs de mise en oeuvre consiste à établir des conditions telles que le débit et les qualités mécaniques soient identiques. Dans ce cas, qui est celui des exemples III et IV, on constate en opérant selon l'invention une diminution sensible du micronaire montrant que les fibres produites sont plus fines, ce qui explique que pour la même résistance thermique le grammage est plus faible.

Quelle que soit la façon de considérer la manière de procéder selon l'invention, elle constitue une amélioration sensible par rapport aux modes antérieurs, ce que confirment les résultats des essais suivants réalisés dans d'autres conditions opératoires.

## 2°/ Essais de variations de divers paramètres.

Divers autres paramètres ont été modifiés en fonction des qualités de produit recherchées, en restant dans les conditions de l'invention.

Les résultats de ces essais figurent dans le tableau suivant.

V VI VII VIII IX
- vitesse périphérique (v)(m/s) 56,5 56,5 75 56,5 71
- débit par orifice (q)
(kg/jour) 1 0,9 0,7 1,25 1
- pression (p) (mm CE) 160 325 270 440 300
- q.v/p 0,35 0,15 0,19 0,16 0,24
- micronaire sous 5 g (F) 4 3 3 4 3
- q.v/P.F 0,088 0,052 0,064 0,040 0,078
- q.v/F 14,12 16,95 17,5 17,65 23,6
- débit total du centrifugeur (tonnes/jour) 18 18 18 25 20
- grammage pour R = 2 (g/m$^2$) 1080 945 915 1140 865
- taux de compression 4 4 - 3 4
- resistance à la traction (g/g) 300 250 - 250 250

L'exemple V est une mise en oeuvre dans des conditions de l'invention pour préparer un produit que l'on peut comparer à celui de l'exemple IV. Les propriétés mécaniques sont intégralement conservées. Le micronaire passe de 3 à 4, c'est-à-dire que les fibres sont un peu moins fines. Il en résulte un grammage un peu plus fort.

Le type de production correspondant à l'exemple V, même si les produits présentent un grammage plus élevé que ceux de l'exemple IV, est intéressant. En effet dans les conditions de centrifugation identiques le changement de la finesse des fibres résulte des différences de fonctionnement du brûleur émettant les gaz chauds d'étirage. L'énergie consommée pour le fonctionnement du brûleur dans le cas de l'exemple V est considérablement réduite par rapport à l'exemple IV, ce qui peut compenser utilement l'accroissement du grammage.

Bien qu'une comparaison exacte ne soit pas possible étant donné que le micronaire n'est pas rigoureusement le même dans les deux cas, on peut déduire par extrapolation que pour un micronaire de 4,5 le grammage dans les conditions de l'exemple V resterait inférieure à celui de l'exemple III. Ceci confirme ce qui apparaissait à la comparaison des exemples II et IV, à savoir la qualité des produits isolants obtenus selon l'invention est meilleure que celle des produits obtenus dans les conditions antérieures, même si cette différence est plus sensible pour les produits les plus fins.

L'exemple VI est une mise en oeuvre analogue à celle de l'exemple IV mais dans laquelle la vitesse périphérique est maintenue et la vitesse de rotation réduite. Les propriétés des produits, aux approximations expérimentales près, sont identiques.

Dans le même ordre d'idées, l'exemple VII est également intéressant. L'influence de la vitesse périphérique sur la qualité des produits isolants préparés apparait encore une fois nettement sur la valeur du grammage.

Dans l'exemple VIII on dispose d'un essai pour un débit de 25 tonnes/jour qui ne constitue pas une limite pour le procédé selon l'invention, mais qui le distingue très nettement des réalisations antérieures dans ce domaine lorsque l'on souhaite des fibres présentant de bonnes qualités. Le micronaire reste en effet relativement faible et le grammage également, bien que légèrement plus élevé qu'à l'exemple V.

L'accroissement remarquable de production ainsi réalisé compense largement cette légère augmentation du grammage nécessaire pour atteindre les qualités isolantes requises.

L'exemple IX est encore une autre forme de réalisation de l'invention qui se distingue à la fois par une vitesse périphérique élevée et une vitesse de rotation relativement faible. Ces conditions de mise en oeuvre permettent d'atteindre des qualités mécaniques et isolantes excellentes (le grammage est particulierement faible) et ceci pour un débit du centrifugeur élevé.

### 3°/ Essais avec rapport q.v/p constant

Ces essais sont effectués avec un centrifugeur de 300 mm de diamètre comportant 11500 orifices.

Le débit par orifice est maintenu constant, et simultanément la vitesse tangentielle et la pression du brûleur sont accrûes approximativement dans les mêmes proportions de façon à maintenir le rapport q.v/p sensiblement constant.

Le tableau suivant récapitule les résultats pour six conditions de marche.

| | IX' | X | XI | XII |
|---|---|---|---|---|
| - vitesse périphérique (v) | 68 | 76 | 85 | 100 |
| - débit par orifice (q) (kg/jour) | 1 | 1 | 1 | 1 |
| - pression (p) (mm CE) | 410 | 460 | 510 | 600 |
| - q.v/p | 0,165 | 0,165 | 0,166 | 0,166 |
| - micronaire sous 5 g (F) | 4,0 | 3,5 | 3,0 | 2,5 |
| q.v/p.F | 0,041 | 0,047 | 0,055 | 0,068 |
| q.v/F | 17 | 21,7 | 28,3 | 40 |
| - débit total du centrifugeur (tonnes/jour) | 11,5 | 11,5 | 11,5 | 11,5 |

Ce tableau montre que dans les conditions selon l'invention en réglant le choix des variables v et p, il est possible pour un même débit unitaire d'affiner les fibres dans certaines limites en accroissant simultanément la vitesse périphérique et la pression du brûleur, c'est-à-dire la vitesse des gaz. Ceci se traduit par une diminution très sensible du micronaire et par suite du grammage utile. Il est aussi possible d'obtenir un micronaire aussi petit que 2 pour un débit de matériau qui reste relativement important.

Une expérience analogue sans modifier cette fois la pression du brûleur montre qu'il est nécessaire pour obtenir un micronaire très faible de réduire sensiblement le débit unitaire et par conséquent le débit global du dispositif.

Dans cette série d'essais le même centrifugeur est utilisé.

| | XIII | XIV | XV | XVI | XVII |
|---|---|---|---|---|---|
| - vitesse périphérique (v) | 63 | 72 | 81 | 90 | 108 |
| - débit par orifice (q) (kg/jour) | 1,3 | 1,14 | 1,0 | 0,9 | 0,76 |
| - pression (p) (mm CE) | 410 | 410 | 410 | 410 | 410 |
| - q.v/p | 0,20 | 0,20 | 0,20 | 0,20 | 0,20 |
| - micronaire sous 5 g (F) | 4,5 | 4,0 | 3,5 | 3,1 | 2,7 |
| - q.v/p.F | 0,044 | 0,050 | 0,056 | 0,063 | 0,074 |
| - q.v/F | 18,2 | 20,5 | 23,1 | 26,1 | 30,4 |
| - débit total du centrifugeur (tonnes/jour) | 15 | 13 | 11,5 | 10,3 | 8,8 |

Les deux opérations précédentes dans lesquelles pour accroitre les qualités isolantes du produit soit on augmente simultanément vitesse périphérique et pression soit on diminue le débit de matériau ne conduisent cependant pas à des résultats tout à fait équivalents.

L'expérience montre en effet que les qualités mécaniques des feutres formés sont sensiblement meilleures dans le cas des produits obtenus avec une faible pression du brûleur comme nous l'avons indiqué précédemment.

Ces différences sont attribuées à une meilleure qualité de la fibre produite pour un effet d'étirage du courant gazeux relativement modéré par rapport à celui résultant du mouvement de rotation du centrifugeur.

Dans les exemples précédents nous avons mis en évidence par comparaison certaines des différences au plan des produits fabriqués et nous avons dit à l'occasion que ces différences se traduisaient au plan des coûts de production. Il est difficile d'évaluer de façon précise l'avantage économique que représente la mise en oeuvre de l'invention au plan industriel. De façon approximative, compte-tenu des différents facteurs intervenant, énergie, produit, matériel, le gain estimé peut atteindre 10 % du coût unitaire ou plus suivant les conditions choisies.

Au cours de ces essais des analyses ont été entreprises pour tenter de déterminer quelles particularités présentent les fibres produites selon l'invention vis-à-vis des fibres obtenues antérieurement pour tenter de rendre compte des améliorations constatées notamment en évaluant la finesse des fibres pour la détermination du micronaire. En dehors de cette approche indirecte, il est difficile de déterminer les caractéristiques des fibres, en particulier leur longueur.

Plusieurs constatations permettent cependant de penser que les conditions opératoires selon l'invention favorisent la formation de fibres plus longues. C'est la résistance à la traction améliorée. C'est aussi l'aptitude des produits à subir un taux de compression plus élevé. C'est encore l'épaisseur du matelas de fibres sortant de la chambre de réception avant d'entrer dans l'enceinte de traitement thermique du liant. On constate en effet un accroissement d'épaisseur sensible en opérant selon l'invention, qui peut atteindre ou dépasser 25 % alors que les conditions notamment de débit de matériau restent identiques. Tous ces aspects d'une certaine façon peuvent être rattachés à un accroissement de longueur des fibres.

Par ailleurs, après des essais de fonctionnement en continu de plus 200 heures, il est constaté que l'usure des centrifugeurs n'était pas telle qu'elle nécessite un remplacement.

Ceci ne constitue que quelques exemples des nombreuses particularités relevées dans la mise en oeuvre des procédés étudiés dans les conditions de l'invention.

Ils permettent d'apprécier la nature des perfectionnements apportés par l'invention et aussi le type d'avantages qui peut en découler pour l'utilisateur.

La production de matelas de fibres pour l'isolation a été étudiée parce qu'elle constitue une application particulièrement significative des procédés de fibrage, aussi bien par les quantités produites que par les qualités qui sont exigées des fibres qui constituent ces matelas.

**Revendications**

1. Procédé de formation de fibres à partir d'un matériau thermoplastique dans lequel le matériau est conduit à l'état étirable dans un organe de centrifugation (1) pourvu à sa périphérie d'orifices, le matériau est projeté par ces orifices hors de l'organe de centrifugation sous forme de filaments lesquels sont entraînés et étirés par un courant gazeux â haute température dirigé le long de la périphérie de l'organe de centrifugation, transversalement au sens de projection des filaments, caractérisé en ce que la vitesse périphérique de l'organe de centrifugation, au niveau des orifices d'où s'échappent les filaments, est au moins égale â 50 m/s.

2. Procédé selon la revendication 1, caractérisé en ce que la vitesse périphérique n'est pas supérieure â 150 m/s.

3. Procédé selon la revendication 1, caractérisê en ce que la vitesse périphérique est comprise entre 50 et 90 m/s.

4. Procédé selon l'une des revendications 1 à 3, caractérisé en ce que le débit de matériau pour chaque orifice $q$ exprimé en kg par jour et la pression d'émission du courant gazeux à haute température $p$ exprimée en millimètres de colonne d'eau pour une largeur supérieure à 5 mm et inférieure à 12 mm sont choisis de telle façon que le rapport q.v/p, $v$ étant la vitesse périphérique en mètre par seconde, soit maintenu dans l'intervalle de 0,07 à 0,5.

5. Procédé selon la revendication 4, caractérisé en ce que le rapport q.v/p est maintenu dans l'intervalle 0,075 à 0,2.

6. Procédé selon l'une des revendications précédentes, caractérisé en ce que le débit par orifice est compris entre 0,1 et 3 kg/ jour.

7. Procédé selon l'une des revendications 1 à 5, caractérisé en ce que le débit par orifice est compris entre 0,7 et 1,4 kg/jour.

8. Procédé selon l'une des revendications précédentes, caractérisé en ce que le courant gazeux à haute température est émis à une pression de 100 à 1000 mm CE pour une largeur d'orifice d'émission qui n'est pas supérieur à 20 mm.

9. Procédé selon l'une quelconque des revendications 1 à 7, caractérisé en ce que le courant gazeux à haute température est émis à une pression de 200 à 600 mm CE pour une largeur d'orifice d'émission qui n'est pas supérieure à 15 mm.

10. Procédé selon l'une quelconque des revendications précédentes, caractérisé en ce que la vitesse de rotation de l'organe de centrifugation est comprise entre 800 et 8000 tours/minute.

11. Procédé selon l'une quelconque des revendications 1 à 9, caractérisé en ce que la vitesse de rotation est comprise entre 1200 et 2250 tours/minute.

12. Procédé selon la revendication 11, caractérisé en ce que le débit de matériau fibré à partir du centrifugeur est supérieur à 12 tonnes de matériau par jour.

13. Procédé selon la revendication 11, caractérisé en ce que le débit de matériau fibré à partir du centrifugeur est égal ou supérieur à 20 tonnes de matériau par jour.

14. Procédé de formation de fibres selon la revendication 1, caractérisé en ce que le rapport q.v/F, dans lequel q représente le débit de matériau par orifice exprimé en kg/jour, v est la vitesse périphérique en m/s et F est le micronaire des fibres formées, est supérieur à 17.

15. Procédé selon la revendication 14 dans lequel le débit par orifice q est compris entre 0,1 et 3 kg/jour.

16. Procédé de formation de fibres selon la revendication 1, caractérisé en ce que le rapport q.v/p.F dans lequel q est le débit de matériau par orifice exprimé en kg/jour, v est la vitesse périphérique en m/s, p est la pression d'émission du courant gazeux pour une largeur lors de son émission qui n'est pas inférieure à 5 mm et pas supérieure à 12 mm, pression exprimée en mm de colonne d'eau, ce rapport est supérieur à 0,035.

17. Procédé selon la revendication 16 dans lequel le débit par orifice est compris entre 0,1 et 3 kg/jour et la pression d'émission du courant gazeux à haute température est de 200 à 600 mm de colonne d'eau.

18. Procédé selon la revendication 16 ou la revendication 17 dans lequel le rapport q.v/p.F est supérieur à 0,040.

## Patentansprüche

1. Verfahren zur Herstellung von Fasern aus einem thermoplastischen Material bei dem das Material in ausziehbarem Zustand in eine Schleudervorrichtung (1) eingeführt wird, die an ihrem Umfang mit Öffnungen versehen ist, wobei das Material durch die Öffnungen aus der Schleudervorrichtung in Form von Fasern hinausgeschleudert wird, welche von einem entlang des Umfangs der Schleudervorrichtung, quer zur Schleuderrichtung der Fasern ausgerichteten Hochtemperatur-Gasstrom mitgenommen und verzogen werden, dadurch gekennzeichnet, daß die Umfangsgeschwindigkeit der Schleudervorrichtung auf der Höhe der Öffnungen durch die die Fasern heraustreten, mindestens 50 m/s beträgt.

2. Verfahren nach Anspruch 1, dadurch gekennzeichnet, daß die Umfangsgeschwindigkeit 150 m/s nicht übersteigt.

3. Verfahren nach Anspruch 1, dadurch gekennzeichnet, daß die Umfangsgeschwindigkeit 50 bis 90 m/s beträgt.

4. Verfahren nach einem der Ansprüche 1 bis 3, dadurch gekennzeichnet, daß die Materialaustragsmenge q für jede Offnung in kg pro Tag und der Ausgangsdruck des Hochtemperatur-Gasstromes p, ausgedrückt in mm Wassersäule für eine Größe größer als 5 mm und kleiner als 12 mm, so gewählt werden, daß die Beziehung q.v/p in einem Bereich zwischen 0,07 und 0,5 gehalten wird, wobei v die Umfangsgeschwindigkeit in m/s ist.

5. Verfahren nach Anspruch 4, dadurch gekennzeichnet, daß die Beziehung q.N/p in einem Bereich von 0,075 bis 0,2 gehalten wird.

6. Verfahren nach einem der vorhergehenden Ansprüche, dadurch gekennzeichnet, daß die Austragsmenge pro Öffnung zwischen 0,1 und 3 kg/Tag liegt.

7. Verfahren nach einem der Ansprüche 1 bis 5, dadurch gekennzeichnet, daß die Austragsmenge pro Öffnung zwischen 0,7 und 1,4 kg/Tag liegt.

8. Verfahren nach einem der vorhergehenden Ansprüche, dadurch gekennzeichnet, daß der Hochtemperatur-Gasstrom mit einem Druck von 100 bis 1000 mm Wassersäule für eine Größe der Austrittsöffnung, die nicht größer als 20 mm ist, ausgestoßen wird.

9. Verfahren nach einem der Ansprüche 1 bis 7, dadurch gekennzeichnet, daß der Hochtemperatur-Gasstrom für eine Größe der Austrittsöffnung, die nicht größer als 15 mm ist, mit einem Druck von 200 - 600 mm Wassersäule ausgestoßen wird.

10. Verfahren nach einem der vorhergehenden Ansprüche, dadurch gekennzeichnet, daß die Umdrehungsgeschwindigkeit der Schleudervorrichtung zwischen 800 und 8000 Umdrehungen/Minute beträgt.

11. Verfahren nach einem der Ansprüche 1 bis 9, dadurch gekennzeichnet, daß die Umdrehungsgeschwindigkeit zwischen 1200 und 2250 U/min beträgt.

12. Verfahren nach Anspruch 11, dadurch gekennzeichnet, daß die von der Schleudervorrichtung ausgebrachte Faser-Materialaustragsmenge größer als 12 t Material pro Tag ist.

13. Verfahren nach Anspruch 11, dadurch gekennzeichnet, daß die von der Schleudervorrichtung ausgebrachte Faser-Materialaustragsmenge gleich oder größer als 20 t Material pro Tag ist.

14. Verfahren zur Herstellung von Fasern nach Anspruch 1, dadurch gekennzeichnet, daß die Beziehung q.v/F größer 17 ist, wobei q die Materialaustragsmenge pro Öffnung in kg pro Tag, v die Umfangsgeschwindigkeit in m/s und F der Micronaire-Wert der gebildeten Fasern ist.

15. Verfahren nach Anspruch 14, bei dem die Materialaustragsmenge q pro Öffnung zwischen 0,1 und 3 kg/Tag beträgt.

16. Verfahren zur Herstellung von Fasern nach Anspruch 1, dadurch gekennzeichnet, daß die Beziehung q.v/p.F größer als 0,035 ist, wobei q die Materialaustragsmenge pro Öffnung in kg/Tag, v die Umfangsgeschwindigkeit in m/s, p der Austrittsdruck des Gasstromes für eine Größe bei seinem Austritt ist, die nicht kleiner als 5 mm und nicht größer als 12 mm ist, wobei der Druck in mm Wassersäule ausgedrückt ist.

17. Verfahren nach Anspruch 16, bei dem die Materialaustragsmenge pro Öffnung zwischen 0,1 und 3 kg/Tag und der Austrittsdruck des Hochtemperatur-Gasstromes zwischen 200 und 600 mm Wassersäule liegt.

18. Verfahren nach Anspruch 16 oder 17, bei dem die Beziehung q.v/p.F größer als 0,040 ist.

**Claims**

1. Process for the formation of fibres from a thermoplastic material in which the material is conducted in a drawable state into a centrifugal device (1) provided at its periphery with orifices, the material is projected from the centrifuging device from these orifices in the form of filaments which are entrained and drawn out by a high temperature gaseous current directed along the periphery of the centrifuging device and transverse to the direction of projection of the filaments, characterised in that the peripheral velocity of the centrifuging device, at the level of the orifices from which the filaments emerge, is at least equal to 50 m/s.

2. Process according to Claim 1, characterised in that the peripheral velocity is not greater than 150 m/s.

3. Process according to Claim 1, characterised in that the peripheral velocity is between 50 and 90 m/s.

4. Process according to any one of Claims 1 to 3, characterised in that the output of material for each orifice $q$ expressed in kg per day and the emission pressure of the high temperature gaseous current $p$ expressed in millimetres of water column for a width greater than 5 mm and inferior to 12 mm are so selected that the ratio q.v/p, where $v$ is the peripheral velocity in metres per second, is maintained within the range 0.07 to 0.5.

5. Process according to Claim 4, characterised in that the ratio q.v/p is maintained within the range 0.075 to 0.2.

6. Process according to any one of the preceding claims, characterised in that the output per orifice is between 0.1 and 3 kg/day.

7. Process according to any one of Claims 1 to 5, characterised in that the output per orifice is between 0.7 and 1.4 kg/day.

8. Process according to any one of the preceding claims, characterised in that the high temperature gaseous current is expelled at a pressure of 100 to 1000 mm of water columm for an emission orifice width not greater than 20 mm.

9. Process according to any one of Claims 1 to 7, characterised in that the high temperature gaseous current is expelled at a pressure of 200 to 600 mm of water column for an emission orifice width not greater than 15 mm.

10. Process according to any one of the preceding claims, characterised in that the rotational velocity of the centrifuging device is between 800 and 8000 rpm.

11. Process according to any of Claims 1 to 9, characterised in that the rotational velocity is between 1200 and 2250 rpm.

12. Process according to Claim 11, characterised in that the output of fiberized material from the centrifuging device is greater than 12 tons of material per day.

13. Process according to Claim 11, characterised in that the output of fiberized material from the centrifuging device is equal to or greater than 20 tons of material per day.

14. Process for forming fibres according to Claim 1, characterised in that the ratio on q.v/F, in which $q$ represents the output of material per orifice expressed in kg/day, $v$ is the peripheral velocity in m/s and $F$ is the micronaire of the fibres formed, is greater than 17.

15. Process according to Claim 14 in which the output per orifice $q$ is between 0.1 and 3 kg/day.

16. Process for forming fibres according to Claim 1, characterised in that the ratio q.v/p.F in which $q$ is the output of material per orifice expressed in kg/day, $v$ is the peripheral velocity in m/s, $p$ is the emission pressure of the gaseous current for a diameter at emission which is not less than 5 mm and not greater than 12 mm, which pressure is expressed in mm of water column, is greater than 0.035.

17. Process according to Claim 16, in which the output per orifice is between 0.1 and 3 kg/day and the emission pressure of the gaseous current at high temperature is from 200 to 600 mm of water column.

18. Process according to Claim 16 or Claim 17 in which the ratio q.v/p.F is greater than 0.040.

**Fig. 1**

**Fig. 2**

**Fig. 3**

# Fig. 4